# EUROPEAN PATENT APPLICATION

(11) **EP 4 425 286 A1**
(43) Date of publication of application: **04.09.2024**
(21) Application number: 23159150.4
(22) Date of filing: 28.02.2023
(51) Int. Cl.: G05B 19/418, B62D 65/12

(54) **LOCALIZATION OF AN ASSEMBLY LINE TOOL**

(71) Applicant: VOLVO TRUCK CORPORATION, 405 08 Göteborg (SE)
(72) Inventor: IUSTIN, Roman, 435 37 Mölnlycke (SE)
(74) Representative: Zacco Sweden AB

(57) **Abstract**

The disclosure relates to an assembly line arrangement (200) comprising an assembly line tool (208) attached to a movable trolley (212) guided by roof-mounted rails (214, 216). The arrangement further comprises one or more first range detectors (218, 222) mounted on the roof-mounted rails (214, 216) and/or trolley (212) in order to determine the position of the trolley in a plane defined by the roof-mounted rails, and one or more second range detectors (230a, 230b) mounted on the trolley (212) in order to determine the location of a chassis of a vehicle (102) on an assembly line (100). The disclosure also relates to a computer-implemented method (300a, 300b) for ensuring correct usage of an assembly line tool at a workstation of an assembly line, wherein the assembly line tool is attached to a movable trolley guided by roof-mounted rails.

## Description

### TECHNICAL FIELD

The disclosure relatesgenerally to the manufacturing of vehicles. In particular aspects, the disclosure relates to the localization of an assembly line tool. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In manufacturing using assembly lines, it is important to track the position and usage of a tool in use on the assembly line to ensure that the right tool is used in the right way for all assembly steps. Various tracking and positioning implementations of tools on an assembly line are in use today, such as comparing pre-recorded images with live camera feeds and equipping the tool and/or vehicle to be assembled with various position and distance sensors.

Assembly line tools can be integrated in an IT system that coordinates tool sequence and/or work order. Correct assembly is possible only if an operator follows the predetermined sequence. However, there is no quality check that operator follow the correct steps. There is thus a need to improve the localization of an assembly tool to ensure proper usage.

### SUMMARY

According to a first aspect of the disclosure, an assembly line arrangement comprises an assembly line tool attached to a movable trolley guided by roof-mounted rails. The arrangement further comprises one or more first range detectors mounted on the roof-mounted rails and/or trolley in order to determine the position of the trolley in a plane defined by the roof-mounted rails, and one or more second range detectors mounted on the trolley in order to determine the location of a chassis of a vehicle on an assembly line. The first aspect of the disclosure may seek to provide an assembly line arrangement that aids in increasing the accuracy and quality of assembly of heavy-duty vehicles. A technical benefit may include a simple and easy location solution for an assembly line tool attached to a movable trolley guided by roof-mounted rails, as well as a simple and easy quality assurance of the correct usage of the assembly line tool at an assembly line.

In some examples, including in at least one preferred example, optionally the one or more first range detectors are laser range meters and/or actuators. A technical benefit may include that it is easy to integrate such range detectors and that they can be adapted to a variety of specific environments.

In some examples, including in at least one preferred example, optionally the one or more second range detectors are LIDAR sensors and/or optical cameras. A technical benefit may include that it is easy to integrate such range detectors and that they can be adapted to a variety of specific environments.

In some examples, including in at least one preferred example, optionally the assembly line tool is a spindle tool comprising a plurality of spindles for tightening bolts of a wheel to the chassis of the vehicle. A technical benefit may include that the tool provides an easy way of ensuring that the bolts are tightened with a correct torque for each wheel.

In some examples, including in at least one preferred example, optionally the arrangement comprises an image capturing unit for determining the position of an axle of a chassis of the vehicle. A technical benefit may include that the tool can be positioned next to an axle to ensure that the tool is aligned with the correct axle of the vehicle and that the correct torque is used for the wheel of that specific axle.

According to a second aspect of the disclosure, a computer-implemented method for ensuring correct usage of an assembly line tool at a workstation of an assembly line, wherein the assembly line tool is attached to a movable trolley guided by roof-mounted rails, comprises:
determining a location of the assembly line tool based on the position of the trolley in a plane defined by the roof mounted rails;
determining a location of a chassis of a vehicle at the work station;
determining a relation between the determined location of the assembly line tool and the determined location of the chassis at the assembly line work station; and,
based on the determined relation between the determined location of the assembly line tool and the determined location of a vehicle chassis at the assembly line work station, locating the assembly line tool relative to the vehicle chassis for correct usage of the assembly line tool. The second aspect of the disclosure may seek to provide a method that that aids in increasing the accuracy and quality of assembly of heavy-duty vehicles. A technical benefit may include ensuring a simple and easy location solution for an assembly line tool attached to a movable trolley guided by roof-mounted rails, as well as a simple and easy quality assurance of the correct usage of the assembly line tool at an assembly line.

In some examples, including in at least one preferred example, optionally wherein locating the assembly line tool relative to the vehicle chassis for the correct usage of the assembly line tool, the method may comprise:
comparing the relation between the determined location of the assembly line tool and the determined location of a vehicle chassis at the assembly line work station with a predefined operating procedure of the assembly line tool in relation to the vehicle chassis. A technical benefit may include assisting an assembly line worker in knowing that the correct operating procedure is used.

In some examples, including in at least one preferred example, optionally the method may comprise: determining a location of an axle on the chassis of the vehicle.

In some examples, including in at least one preferred example, optionally determining a location of an axle on the chassis of the vehicle may comprise:
capturing an image of the chassis with an image capturing unit, and
determining the position of the axle of the chassis of the vehicle by image recognition. A technical benefit may include that it is possible to determine the axle position and thereby to determine the correct torque needed for the assembly of the wheel.

In some examples, including in at least one preferred example, optionally wherein determining the location of the assembly line tool based on the position of the trolley in a plane defined by the roof mounted rails the method may comprise:
determining the location of the assembly line tool using one or more first range detectors being laser range meters and/or actuators. A technical benefit may include that it is easy to integrate and that can be adapted to a variety of specific environments.

In some examples, including in at least one preferred example, optionally wherein determining the location of the chassis of the vehicle at the work station;
determining the location of the chassis using the one or more second range detectors being LIDAR sensors and/or optical cameras. A technical benefit may include that it is easy to integrate such sensors and that they can be adapted to a variety of specific environments.

In some examples, including in at least one preferred example, optionally the assembly line tool is spindle tool comprising a plurality of spindles for tightening bolts of a wheel to the chassis of the vehicle. A technical benefit may include that the tool provides an easy way of ensuring that the bolts are tightened with a correct torque.

According to a third aspect of the disclosure, a computer-implemented assembly line tool localization system comprises:
a controller configured to connect the localisation system to the one or more first and second range detectors of the arrangement according to any one of the above claims;
memory;
computer code;
one or more processor(s) or processing circuitry; and
a data communications transceiver arrangement connected to an antenna;
wherein the computer code, when loaded from memory and executed by the one or more processors or processing circuitry, causes the localisation system to wirelessly connect to the one or more first and second range detectors and perform the above described methods. The third aspect of the disclosure may seek to the same problem as the method and provide the same technical benefit.

According to a fourth aspect of the embodiments herein, the object is achieved by a computer program product comprising instructions which, when executed in a processing circuitry, cause the processing circuitry to carry out the methods described above.

According to a fifth aspect of the embodiments herein, the object is achieved by a non-transitory computer-readable storage medium comprising instructions, which when executed by the processing circuitry, cause the processing circuitry to perform the methods described above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein a computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary overview of a manufacturing line for heavy-duty vehicle.
**FIG. 2A** **is** an exemplary overview of an arrangement comprising an assembly line tool attached to a movable trolley guided by roof-mounted rails.
**FIG. 2B** is an exemplary overview of the movable trolley for an assembly line tool guided by roof-mounted rails.
**Fig. 2C** is an exemplary overview over location detection of chassis on an assembly line.
**Fig. 3A** is a flowchart of an exemplary method for ensuring correct usage of an assembly line tool at a workstation of an assembly line.
**Fig. 3B** is a flowchart of an exemplary method for positioning an assembly line tool relative a chassis position.
**Fig. 4** is an exemplary overview of an assembly line tool localization system.
**FIG. 5** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

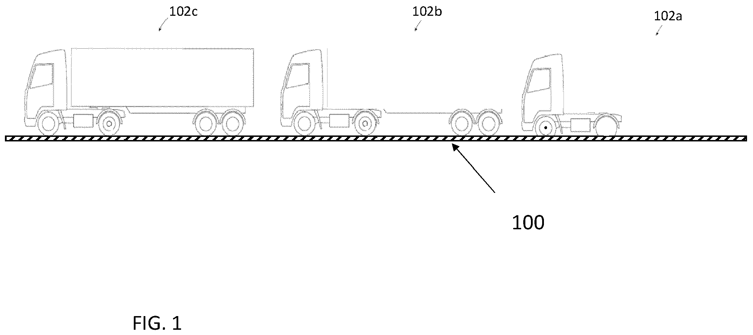

**FIG. 1** is an exemplary overview of a manufacturing line for heavy-duty vehicles. In figure 1, an assembly line **100** can be seen with vehicle **102a-c** in different stages of completion.

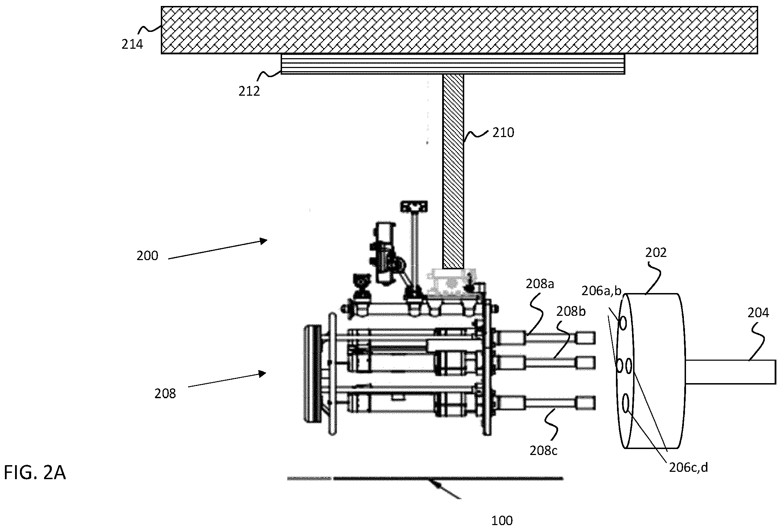

**FIG. 2A** is an exemplary overview of an assembly line arrangement **200** arranged in a roof-mounted fashion suspended over the assembly line **100.** A wheel **202** is arranged to be mounted to a chassis of a vehicle. The wheel **202** is arranged on an axle **204** of a vehicle **102** and is arranged to receive one or more bolts for fastening. Holes **206a-206d** are shown as examples of where the bolts can be received in the wheel **202** for tightening against a corresponding wheel hub assembly on the axle **204.** The assembly line tool **208** is according to one example a spindle tool arranged for tightening bolts of the wheel **202** to the chassis of a vehicle **102a-102c** of figure 1. The assembly line tool **208** comprises a plurality of spindles **208a-208c** and is attached via a spindle support strut **210** to a movable trolley or mount **212** which in turn is guided by a roof-mounted rail **214.** The spindle tool may also be known as a nut runner and may comprise one to five spindles.

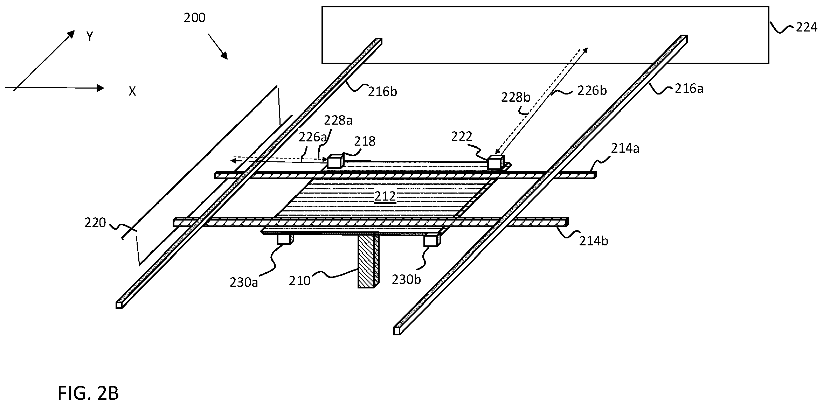

**FIG. 2B** is an exemplary overview of the movable trolley **212** for an assembly line tool **208** guided by roof-mounted rails **214, 216.** In fig. 2B, the movable trolley **212** can be seen arranged on the roof-mounted rails **214, 216** which enables the trolley **212** to move in a plane defined by an x-axis and a y-axis as seen in the figure. The spindle support strut **210** supports the spindle tool (not shown).

The roof-mounted rails **214, 216** comprise a first and a second x-rail **214a, 214b** and a first and second y-rail **216a, 216b.** In the example of figure 2B, the trolley **212** is movably attached to the first and second x-rails **214a, 214b** while the first and second x-rails **214a, 214b** are movably attached to the first and second y-rails **216a, 216b.** The opposite arrangement is of course possible. The trolley is movable by hand or by motors to a desired position.

The trolley **212** further comprises a first range detector **218** or an x-direction range detector arranged to measure the distance to an x-direction reflector **220** arranged perpendicular to the x-rails **214a, 214b,** i.e. parallel to the y-rails **216a, 216b.** The x-direction reflector **220** is arranged to provide a reference for the x-direction range detector **218** to determine where along the x-direction the trolley **212** is located.

Similarly, the trolley **212** further comprises a further first range detector **222** or a y-direction range detector arranged to measure the distance to a y-direction reflector **224** arranged perpendicular to the y-rails **216a, 216b,** i.e. parallel to the x-rails **214a, 214b.** The y-direction reflector **224** is arranged to provide a reference for the y-direction range detector **222** to determine where along the x-direction the trolley **212** is located.

Ranging beams **226a,b** are projected from the x-direction range detector **218** and y-direction range detector **222** respectively. Return beams **228a,b** provide the distances to the x-direction reflector **220** and y-direction reflector **224** respectively. The distances determine the location of the trolley with an x-coordinate and a y-coordinate. The one or more first range detectors **(218, 222)** are laser range detectors and/or actuators.

Further, two second range detectors **230a,b** or cab range detectors are arranged on the trolley to determine the distance to the chassis of the vehicle that is to be assembled.

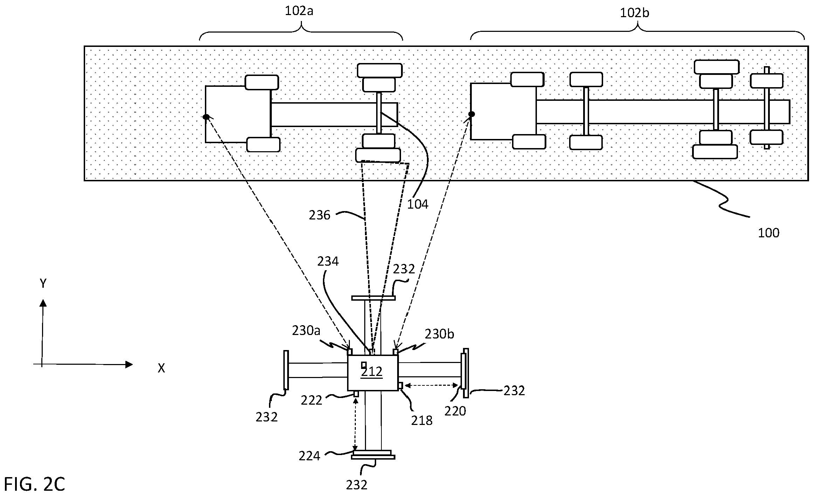

**Fig. 2C** is an exemplary overview over location detection of chassis on an assembly line. Two trucks **102a,b** with different axle configurations are positioned on the assembly line **100.**

The trolley **212** with the spindle tool (not shown) is arranged at a distance from the assembly line **100.** As described above, the x-direction range detector **218** and y-direction range detector **222** in combination with the x-direction reflector **220** and y-direction reflector **224** provide the location of the trolley as described above.

The cab range detectors **230a,b** on the trolley **212** measures the distance to a predetermined point on each of the chassis of the trucks **102a,b,** for instance to a midpoint of a cab of the vehicles **102a,b,** thereby comparing the relation between the determined location of the trolley **212** with the spindle tool as obtained from the x-direction range detector **218** and y-direction range detector **222** with the location of a specific vehicle chassis **102a,b** at a work station on the assembly line **100** with a predefined operating procedure of the spindle too in relation to the vehicle chassis **102a,b.**

The arrangement **200** may further comprise an image capturing unit **234** for determining the position of an axle **104** of the chassis of the vehicle **102a,b.** The image capturing unit **234** has a field of view **236** that is arranged to focus on one of the axles **104** of the vehicle **102a,b** in order to determine the location of the axle **104.** By comparing the image within the field of view **236** of the image capturing unit **234,** the position of the axle can be determined by means of image recognition. In this way, the tool can be positioned next to a specific axle **104** to ensure that the tool is aligned with the correct axle of the vehicle and that the correct torque is used for the wheel of that specific axle.

For completeness, parts of rail supports **232** for the x-rails **214a,b** and y-rails **216a,b** are shown in figure 2C.

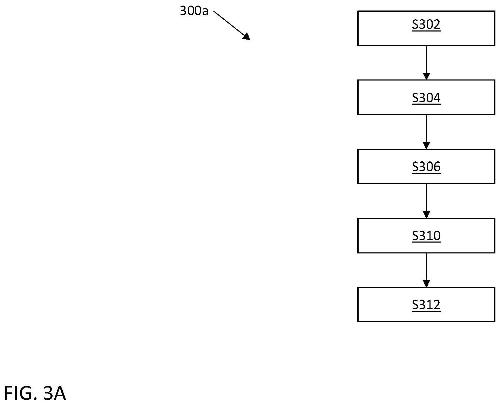

**Fig. 3A** is a flowchart of an exemplary method **300a** for ensuring correct usage of an assembly line tool at a workstation of an assembly line. The method **300a** may comprise the following actions, steps or operations.

**Action S302.** The location of the trolley's **212** position in the x-y plane coordinate system is measured. This is performed by acquiring distance data from ranging and return beams **226a,b** and **228a,b** from the x-direction range detector **218** and y-direction range detector **222. Action S304.** The position of a cab of the vehicle **102a,b** to be assembled in the x-y plane coordinate system is determined. This is performed by the cab range detectors **230a,b. Action S306.** From the vehicle cab position in the x-y plane coordinate system, the location of the chassis in the x-y plane coordinate system can be determined. This can be done since the size of the cab and its relative position on the chassis is well known. **Action 5310.** The location of the tool relative to the location of the chassis is determined. Since the positions of the tool and the chassis in the x-y plane coordinate system are known, their relative positions can be easily determined. **Action 5312.** With the relative position of the tool and the chassis known, the tool can be correctly positioned relative the chassis for correct usage of the tool.

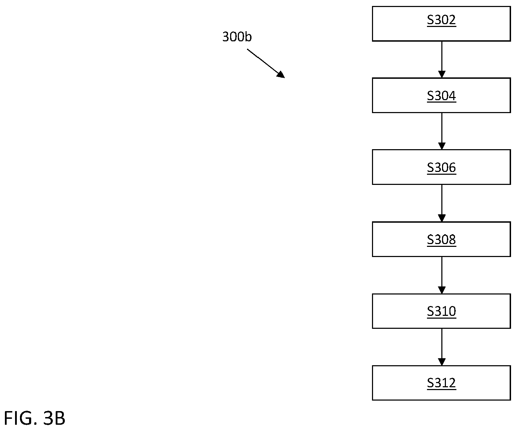

**Fig. 3B** is a flowchart of an exemplary method **300b** for positioning an assembly line tool relative a chassis position. The method **300b** may comprise the following actions, steps or operations. This method **300b** is a more detailed variation of the method **300a** of Fig. 3A and thereby contains some of the same actions, steps or operations.

**Action S302.** The location of the trolley's **212** position in the x-y plane coordinate system is measured. This is performed by acquiring distance data from ranging and return beams **226a,b** and **228a,b** from the x-direction range detector **218** and y-direction range detector **222. Action S304.** The position of a cab of the vehicle **102a,b** to be assembled in the x-y plane coordinate system is determined. This is performed by the cab range detectors **230a,b. Action S306.** From the vehicle cab position in the x-y plane coordinate system, the location of the chassis in the x-y plane coordinate system can be determined. This can be done since the size of the cab and its relative position on the chassis is well known. **Action S308.** Once the location of the chassis is known from **Action 306,** more detailed positions on the chassis can be determined. Continuing with the example of the spindle tool **208,** one or more axle positions on the chassis of the truck to be assembled can be determined. This is for instance done via known distances from the cab of each axle and/or by image recognition using an image captured by an image capturing unit. **Action 5310.** The location of the spindle tool **208** relative to the location of the axle position is determined. Since the positions of the tool and the chassis in the x-y plane coordinate system are known, their relative positions can be easily determined or an optical camera can be used to further determine the location. **Action 5312.** With the positions of the spindle tool and the axle known, the spindle tool can be aligned with the axle position for usage of the spindle tool to tighten the bolts of the wheel.

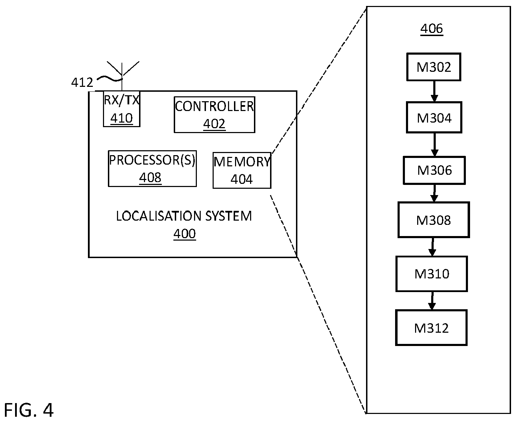

**Fig. 4** is an exemplary overview of an assembly line tool localization system **400.** The localisation system **400** comprises a controller **402** configured to connect the localisation system to the one or more first and second range detectors **218, 222, 230a, 230b** of the assembly line arrangement **200.** The system **400** further comprises a memory **404,** computer code **406,** one or more processor(s) or processing circuitry **408,** and a data communications transceiver arrangement **410** connected to an antenna **412.** The computer code, when loaded from memory **404** and executed by the one or more processors or processing circuitry **408,** causes the localisation system **400** to wirelessly connect to the one or more first and second range detectors **218, 222, 230a, 230b** and perform the actions, steps or operations of the methods described above.

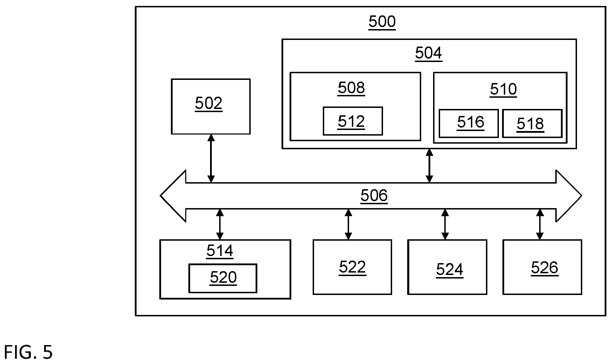

**FIG. 5** is a schematic diagram of an exemplary computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include a processor device **502** (may also be referred to as a control unit), a memory **504,** and a system bus **506.** The computer system **500** may include at least one computing device having the processor device **502.** The system bus **506** provides an interface for system components including, but not limited to, the memory **504** and the processor device **502.** The processor device **502** may include any number of hardware components for conducting data or signal processing or for executing computer code stored in memory **504.** The processor device **502** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processor device **502** (e.g., via a circuit or any other wired, wireless, or network connection) and may include computer code for executing one or more processes described herein. The memory **504** may include non-volatile memory **505** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with a processor device **502.** A basic input/output system (BIOS) **512** may be stored in the non-volatile memory **505** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **514** and/or in the volatile memory **510,** which may include an operating system **516** and/or one or more program modules **515.** All or a portion of the examples disclosed herein may be implemented as a computer program product **520** stored on a transitory or non-transitory computer-usable or computer-readable storage medium (e.g., single medium or multiple media), such as the storage device **514,** which includes complex programming instructions (e.g., complex computer-readable program code) to cause the processor device **502** to carry out the steps described herein. Thus, the computer-readable program code can comprise software instructions for implementing the functionality of the examples described herein when executed by the processor device **502.** The processor device **502** may serve as a controller or control system for the computer system **500** that is to implement the functionality described herein.

The computer system **500** also may include an input device interface **522** (e.g., input device interface and/or output device interface). The input device interface **522** may be configured to receive input and selections to be communicated to the computer system **500** when executing instructions, such as from a keyboard, mouse, touch-sensitive surface, etc. Such input devices may be connected to the processor device **502** through the input device interface **522** coupled to the system bus **506** but can be connected through other interfaces such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may also include a communications interface **526** suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

According to some additional examples, a control system comprising one or more control units configured to perform the method according to any of the examples described above is also provided.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. For instance, the disclosure can be adapted to the location of any assembly line tool attached to a movable trolley guided by roof-mounted rails. In the drawings and specification, there have been disclosed aspects for purposes of illustration only and not for purposes of limitation, the scope of the disclosure being set forth in the following claims.

## Claims

1. An assembly line arrangement (200) comprising an assembly line tool (208) attached to a movable trolley (212) guided by roof-mounted rails (214, 216), the arrangement further comprising:
one or more first range detectors (218, 222) mounted on the roof-mounted rails (214, 216) and/or trolley (212) in order to determine the position of the trolley in a plane defined by the roof-mounted rails, and
one or more second range detectors (230a, 230b) mounted on the trolley (212) in order to determine the location of a chassis of a vehicle (102) on an assembly line (100).

2. The arrangement (200) according to claim 1, wherein the one or more first range detectors (218, 222) are laser range meters and/or actuators.

3. The arrangement (200) according to claim 1 or 2, wherein the one or more second range detectors (230a, 230b) are LIDAR sensors and/or optical cameras.

4. The arrangement (200) according to any one of claims 1 to 3, wherein the assembly line tool (208) is spindle tool comprising a plurality of spindles (208a,b,c) for tightening bolts of a wheel to the chassis of the vehicle (102).

5. The arrangement (200) according to any one of the preceding claims, wherein the arrangement (200) further comprises:
an image capturing unit (234) for determining the position of an axle (104) of the chassis of the vehicle (102).

6. A computer-implemented method (300a, 300b) for ensuring correct usage of an assembly line tool at a workstation of an assembly line, wherein the assembly line tool is attached to a movable trolley guided by roof-mounted rails, the method comprising determining a location of the assembly line tool based on the position of the trolley in a plane defined by the roof mounted rails (S302);
determining a location of a chassis of a vehicle (102) at the work station (S306); determining a relation between the determined location of the assembly line tool and the determined location of the chassis at the assembly line work station (S310); and,
based on the determined relation between the determined location of the assembly line tool and the determined location of a vehicle chassis at the assembly line work station, locating the assembly line tool relative to the vehicle chassis for correct usage of the assembly line tool (S312).

7. The computer-implemented method according to claim 6, wherein locating the assembly line tool relative to the vehicle chassis for the correct usage of the assembly line tool comprises:
comparing the relation between the determined location of the assembly line tool and the determined location of a vehicle chassis at the assembly line work station with a predefined operating procedure of the assembly line tool in relation to the vehicle chassis.

8. The computer-implemented method according to claim 6 or 7, wherein the method comprises:
determining a location of an axle (104) on the chassis of the vehicle (102) (S308).

9. The computer-implemented method according to claim 8, wherein determining a location of an axle (104) on the chassis of the vehicle (102) comprises:
capturing an image of the chassis with an image capturing unit (234), and
determining the position of the axle (104) of the chassis of the vehicle (102) by image recognition.

10. The computer-implemented method according to any one of claims 6 to 9, wherein determining the location of the assembly line tool based on the position of the trolley in a plane defined by the roof mounted rails (S302) comprises:
determining the location of the assembly line tool using one or more first range detectors (218, 222) being laser range meters and/or actuators.

11. The computer-implemented method according to any one of claims 6 to 10, wherein determining a location of a chassis of a vehicle (102) at the work station (S306); determining the location of the chassis using the one or more second range detectors (230a, 230b) being LIDAR sensors and/or optical cameras.

12. The computer-implemented method according to any one of claims 6 to 11, wherein the assembly line tool (208) is spindle tool comprising a plurality of spindles (208a,b,c) for tightening bolts of a wheel to the chassis of the vehicle (102).

13. A computer-implemented assembly line tool localization system (400) comprising:
a controller (402) configured to connect the localisation system to the one or more first and
second range detectors (218, 222, 230a, 230b) of the arrangement (200) according to any one of the above claims;
memory (404);
computer code (406);
one or more processor(s) or processing circuitry (408); and
a data communications transceiver arrangement (410) connected to an antenna (412);
wherein the computer code, when loaded from memory and executed by the one or more processors or processing circuitry, causes the localisation system to wirelessly connect to the one or more first and second range detectors and perform a method according to any one of claims 6 to 12.

14. A computer program product comprising program code for performing, when executed by the processing circuitry, the method of any of claims 6-12.

15. A non-transitory computer-readable storage medium comprising instructions, which when executed by the processing circuitry, cause the processing circuitry to perform the method of any of claims 6-12.
